# EUROPEAN PATENT APPLICATION

(11) **EP 4 578 824 A1**
(43) Date of publication of application: **02.07.2025**
(21) Application number: 24460048.2
(22) Date of filing: 27.12.2024
(51) Int. Cl.: C01B 15/013

(54) **METHOD OF PRODUCING HIGHLY CONCENTRATED HYDROGEN PEROXIDE**

(30) Priority: 29.12.2023 PL 44738023
(71) Applicant: Jakusz SpaceTech Sp. z o.o., 83-315 Szymbark (PL)
(72) Inventor: Jakusz, Bartosz, 83-315 Szymbark (PL); Reglinska - Nazdrowicz, Dagmara, 83-300 Kartuzy (PL); Okroj, Natalia, 83-400 Koscierzyna (PL); Wojewódka, Przemyslaw, 83-314 Somonino (PL); Mankowski, Damian, Gdansk (PL)
(74) Representative: Czabajski, Jacek

(57) **Abstract**

A method of producing highly concentrated hydrogen peroxide where the initial technical raw material in the form of an aqueous solution of hydrogen peroxide, with concentration between 50% and 60%, is purified an placed inside the evaporating vessel of a vacuum rotary evaporator unit, where it is subjected to vacuum distillation. Next, the end product in the form of aqueous solution of hydrogen peroxide with concentration between 85% and 95% is placed in the receiving vessel. The method of producing is characterised in that the technical raw material is purified in a set (4) of reverse osmosis columns (5), such that the technical raw material with concentration between 50% and 60% is transferred from the technical raw material tank (1) placed inside the initiating module (16) using a piston pump (3) to the set (5) of reverse osmosis columns (4). During purification, feed in the form of the purified first intermediate product is obtained, as well as the filtration waste in the form of condensate collected from the membrane surfaces (5a). The condensate is returned to the technical tank (1) inside the initiating module (16), while the purified technical raw material as purified intermediate product is transferred to a buffer tank (6), where quality of the technical raw material is controlled using a sampling module (22). Next, the first intermediate product is pumped from the buffer tank (6), using a vacuum pump (10) to at least one evaporating vessel (15) and subjected to vacuum distillation in two distillation sub-stages. At the end of the second sub-stage, the final product with hydrogen peroxide concentration between 85% and 98% is transferred to a receiving vessel (12).

## Description

The subject of the invention is a method of producing highly concentrated hydrogen peroxide H₂O₂ Hydrogen peroxide at 30% concentration is used, inter alia, as a strong oxidising agent in the chemical industry. On the other hand, 85% to 98% concentrated hydrogen peroxide may be used as an additive in the form of a fuel oxidiser added to rocket drive systems.

Hydrogen peroxide is a colourless liquid at room temperature. It has strong oxidising properties caused by the fact that in statu nascendi oxygen is one of its decomposition products. Pure hydrogen peroxide is unstable and decomposes exothermically into water and molecular oxygen under the influence of various agents, such as heat, UV radiation or contact with certain inorganic substances. This decomposition can be activated by a range of fine chemical substances or metals. Hydrogen peroxide is stored in pressure polyethylene bottles and is not exposed to daylight and heat sources.

Hydrogen peroxide is obtained, for example, in the known anthraquinone process, through oxidation of 2-ethyl-9,10-anthracenediol with gaseous oxygen passed through a solution of this compound. Hydrogen peroxide is usually separated through water extraction. 2-ethylanthraquinone remaining in water is regenerated using gaseous hydrogen, by catalytic reduction.

The process usually yields a diluted, 30% aqueous solution of hydrogen peroxide. The obtained solution is usually concentrated to ca. 50% by water evaporation under vacuum.

The subject of the invention also includes a method of hydrogen peroxide concentration up to 98%, including the standard designated as HTP hydrogen peroxide, through vacuum distillation. A range of technological solutions used to concentrate hydrogen peroxide is known.

The solution known from the Polish patent publication no. P.432158 includes the subject of the application, which is a method of hydrogen peroxide concentration, wherein the starting hydrogen peroxide with a concentration of 50% to 70% is placed in the evaporating vessel of a rotary vacuum evaporator and distilled under vacuum in stages. The first stage involves vacuum distillation of the starting hydrogen peroxide and the first intermediate product PP1 is obtained with a concentration of 80% to 93%. During the initial stage of distillation, the first distillate with concentration of 10% to 30% is removed into the receiver. In the second stage, the pressure is changed and the second distillate D50 with concentration of 40% to 58% is collected in the receiver, wherein the distillation is continued and the first intermediate product PP1 with a concentration of 80% to 93% is obtained in the receiver. In the third stage, the first intermediate product PP1 is subjected to vacuum distillation and the third distillate D75 is collected, with a concentration of 70% to 80%. The third distillate D75 is collected in a release vessel NZ. The distillation is continued and the second intermediate product PP2 is collected in the receiver, with hydrogen peroxide concentration of 90% to 95%. In the first stage, the second intermediate product PP2 is further distilled and distillate D80 is initially removed to the receiver, with hydrogen peroxide concentration of 70% to 93%, followed by the collection of the product P from the evaporation vessel, with hydrogen peroxide concentration of 96% to 99.5% with the HTP specification conforming to MIL-PRF 16005F.

In the solution known from the European patent publication no. EP 3118157, a single stage system used to concentrate and purify hydrogen peroxide is disclosed, in particular, used to produce concentrated hydrogen peroxide with high HTP peroxide content, with the minimum concentration of 98% for use in drive systems. The system includes heating elements, a water bath and a driven rotary box inclined at an angle of 105° to 140° against the fractioning column. The system also includes a condenser and a distillate receiver. According to this known solution, the system additionally includes a stationary flask 4 placed between the fractioning column and the rotary flask where the raw material is placed and it includes a condenser placed above the fractioning column and upstream of the condenser, controlled by the flow rate of the cooling liquid. Additionally, a cut-off valve is placed downstream of the condenser, which closes the main receiver containing an additional condenser, which is connected to a vacuum pump at one and and to an auxiliary receiver on the other. The fractioning column operates under adiabatic conditions, and the final product is obtained from two flasks. The method of producing highly concentrated hydrogen peroxide, in particular at a HTP concentration of at least 98% for use in drives, in a system according to the invention includes carrying out a single stage process producing concentrated hydrogen peroxide through concentration and purification.

In another solution known from the Polish patent application P.403721, a device for vacuum distillation of a solution containing hydrogen peroxide is presented, which includes sequentially heating elements, an axially symmetrical distillation flask, means used to rotate the distillation flask around its axis of symmetry, a rectification column, a drop collector, a vacuum pump connector, a cooling water mantle and a distillate receiver. According to this known solution, the axis of symmetry of the distillation flask is set at an angle of 105° to 140° against the rectification column. The distillation flask may rotate around its axis and is at least partially placed inside the heating elements. The distillation flask also includes a sensor measuring the hydrogen peroxide concentration. This known solution also applies to the method of producing hydrogen peroxide, particularly of the HTP class, for use in drives, in a two stage vacuum distillation process. The process according to this known solution includes a fractioning stage and a vacuum purification stage. Vacuum distillation is carried out during the first fractioning stage, involving hydrogen peroxide concentration, wherein the rotary distillation flask operates at approximately 80 rotations per minute, at a vacuum between 7 mbar and 20 mbar and at a temperature between 35°C and 55°C. During the second vacuum purification stage, the rotary evaporator operates at least at 120 rotations per minute, at vacuum to 12 mbar and at temperatures up to 55°C.

Another solution, known from the international patent application disclosure in WO 2012/025333, presents a different solution to the concentrating method used with aqueous solutions of hydrogen peroxide. According to this known solution, two hydrogen peroxide streams with different concentration are generated in a device including an initial evaporator, a distillation column and a steam compressor. The method involves the aqueous solution of hydrogen peroxide being continuously supplied to the initial evaporator, while steam is supplied to the distillation column. The bottom product is obtained during the initial stage The concentrated stream of hydrogen peroxide is initially removed from the evaporator. Vapours formed inside the distillation column is collected from the distillation column at the column head, compressed by the compressor and used to heat the initial evaporator. The column obtained from the distillation column is collected from the bottom as the second stream of concentrated hydrogen peroxide. This technology is used to produce two concentrated hydrogen peroxide solutions with different concentrations simultaneously, in the mass concentration range between 50 and 70% hydrogen peroxide in any selected ratio, by supplying part of the bottom product obtained in the distillation evaporator.

In another solution known from the patent disclosure GB 872925, an aqueous solution of hydrogen peroxide containing at least 8% of hydrogen peroxide by weight is concentrated by heating the solution under pressure below atmospheric pressure to produce the first mixture of hydrogen peroxide and steam. This first message is introduced into the intermediate section of the area where liquid contacts the gas under pressure lower than the atmospheric pressure, introducing to the lower contact area the second mixture of hydrogen peroxide and steam containing a higher share of hydrogen peroxide corresponding to vapour in equilibrium with aqueous solution of hydrogen peroxide containing at least 70% of hydrogen peroxide by weight. This process is carried out in a countercurrent to selectively remove water from the first mixture. In a preferable embodiment, diluted aqueous solution of hydrogen peroxide with 40% concentration is introduced into the system and mixed with hydrogen peroxide with 73.5% concentration. This mixture circulates through the evaporator 2 to the separator 4 containing glass fibre, which cause the liquid to flow downwards and steam containing 39.1% of hydrogen peroxide is transferred inside the column 10 filled with Rashig rings. An evaporator is located at the column base, which ensures that the 88.83% hydrogen peroxide solution remains boiling and supplies adequate steam required to obtain distillate free of hydrogen peroxide, which is collected. At the same time, 88.83% hydrogen peroxide is collected at the bottom of the column as the product. The entire system operates under vacuum.

In another solution known from the US 2005/252856 document, another method of concentration hydrogen peroxide solutions using a polymeric separation membrane is disclosed. The membrane is selectively permeable to water compared to hydrogen peroxide permeability, thus facilitating concentration of hydrogen peroxide by transporting water through the membrane. Thanks to the use of this solution, hydrogen peroxide solutions with concentrations up to 85% by volume or higher may be produced in situ without collection of significant quantities of highly concentrated solutions and without the need to use hazardous temperatures.

The problem with obtaining high concentrations of hydrogen peroxide, on the order of 98%, is the presence of trace contaminations in solutions with concentrations above 80%, which make obtaining hydrogen peroxide conforming to the MIL-PRF 16005F standard difficult. The objective of the invention is to provide a method of hydrogen peroxide concentration up to 98% by purifying a solution via reverse osmosis, followed by distillation with simultaneous removal of the remaining contamination.

According to the invention, the method of producing highly concentrated hydrogen peroxide is characterised in that the technical raw material in the form of aqueous solution of hydrogen peroxide with concentration of 50% to 60% is purified. This purified aqueous solution of hydrogen peroxide is placed in an evaporator vessel of a vacuum rotary evaporator unit and subjected to vacuum distillation. Next, the end product in the form of aqueous solution of hydrogen peroxide with concentration of hydrogen peroxide between 85% and 95% is placed in the receiving vessel.

According to the invention, the method of producing highly concentrated hydrogen peroxide is characterised in that the technical raw material is purified in a reverse osmosis column unit. The purification process is carried out such that the technical raw material with concentration of 50% to 60% is transferred from the technical raw material tank placed inside the initiating module, using a piston pump, to the reverse osmosis column unit containing membranes. During purification, feed in the form of the purified first intermediate product is obtained, as well as the filtration waste in the form of condensate collected from the membrane surface, which is returned to the technical tank in the initiating module. The purified technical raw material as the first intermediate product is transferred to the buffer tank, where the quality of the technical raw material is checked in the sampling module.

In a preferred embodiment of the solution according to the invention, parameters of the purified first intermediate product are controlled in the sampling module, where the following parameters are sampled using a density meter, a conductometer and a concentration analyser: density, conductivity and metal contamination, wherein the permitted density parameters are maintained in the range from 1.22 g/cm3 to 1.24g/cm3, conductivity parameters from 90 µS/cm to 120 µS/cm while the permitted metal contamination parameters are specified in the range from 0.01 to 0.015 mg/l.

In another preferred embodiment of the invention, the purified technical raw material with concentration between 50% and 60% is transferred from the buffer tank to the hydrogen peroxide concentration unit, which includes at least two vacuum rotary evaporator units, where the first intermediate product is concentrated. Both vacuum rotary evaporator units are used to concentrate the first intermediate product during vacuum distillation, which is carried out simultaneously. The first intermediate product is distilled in two sub-stages, where in the first sub-stage, each of the evaporator units yields the second intermediate product with hydrogen peroxide concentration in aqueous solution between 71% and 84%, while in the second sub-stage, the final product is obtained in the form of solution with the concentration of hydrogen peroxide in said solution from 85% to 98%.

In another preferred embodiment of the solution according to the invention, the first intermediate product from the buffer tank is pumped to at least one evaporating vessel of the hydrogen peroxide concentration unit using a vacuum pump. The intermediate product is then subjected to the first vacuum distillation stage under the pressure between 10 mbar and 15 mbar. The first intermediate product with hydrogen peroxide concentration between 71% and 84% in aqueous solution is thus obtained. Next, in the same concentration unit and using the same vacuum rotary evaporator units, the second concentration sub-stage is carried out in a single process cycle. During the second concentration sub-stage, the first intermediate product is subjected to the second stage of vacuum distillation. During the second stage of vacuum distillation, the working pressure of steam is adjusted within the value range from 5 mbar to 9 mbar. The final product with hydrogen peroxide concentration between 85% and 98 % in this solution is thus obtained. Next, the final product is transferred to a receiving vessel.

The subject of the invention is presented below in embodiments of the invention illustrating the process of hydrogen peroxide concentration. Tables presenting a summary of parameters of three example processes according to the invention are provided. Two embodiments of a vacuum rotary evaporator unit are also presented. The attached, individual figures illustrate as follows:
- Fig. 1 -: the set of equipment used in the stage of technical raw material purification in osmotic columns and connections between the concentration modules.
- Fig. 2 -: the first vacuum rotary evaporator unit used to implement the concentration stage
- Fig. 3 -: the second vacuum rotary evaporator unit used to implement the concentration stage

The attached figures, from Fig. 1 to Fig. 3, present the example set of equipment used to implement the method according to the invention. The method of producing highly concentrated hydrogen peroxide with concentration between 85% and 95% in aqueous solution is characterised in that the technical raw material is purified such that technical raw material with concentration between 50% and 60% is transferred from the technical raw material tank 1 placed in the initiating module 16 using a piston pump 3 to the set 5 of columns, where purification is carried out using reverse osmosis. The purification process in the presented embodiment of the invention, shown in Fig. 1, is characterised in that purification of the technical raw material using reverse osmosis according to the invention includes the use of working pressures of 15 mbar in the reverse osmosis column unit. The used pressure forces the flow of the solution mass, resulting in the solution mass being filtered through the membrane 5a under pressure, after which filtration deposit remains on one side of the membrane, while only the feed free of the deposit passes through the membrane.

Condensate collected from the surface of membranes 5a is returned to the technical tank 1 inside the initiating module 16. In the presented embodiment, membranes 5a are made of polyamide. The technical raw material purified on the membranes 5a as the first intermediate product is transferred to the buffer tank 6, where the quality of the technical raw material is checked in the sampling module. The sampling module 22 used to collect a sample of the intermediate product from the buffer tank 6 includes the following devices: density meter 22a used to measure the intermediate product density, conductometer 22b used to measure the intermediate product conductivity and analyser 22c used to determine the levels of metals and organic carbon content in liquid samples. The parameters to be met by the purified raw material are as followed, density: 1.22-1.24g/cm3, concentration: 55-60%, conductivity: 90-120µS/cm, total organic carbon content: 20-30mg/L and metal content: from 0,01 to 0,015. The parameters of the technical raw material before purification are as follows, density: 1.22-1.24g/cm3, concentration: 55-60%, conductivity: 700-800µS/cm, total organic carbon content: 450-500mg/L, metal content: 0.016 mg/L-0.125 mg/L. Parameters related to metal level, organic carbon content and conductivity decrease during the purification process. The concentration parameters of the aqueous solution of hydrogen peroxide and the density of the aqueous solution of hydrogen peroxide should not decrease according to the process requirements. This controlled first intermediate product is transferred to the hydrogen peroxide concentration unit 7.

The method of producing according to the invention is characterised in that the purified technical raw material with concentration between 50% and 60% is transferred from the buffer tank to the hydrogen peroxide concentration unit 7 consisting of at least two vacuum rotary evaporator units 7a, 7b, where the intermediate product in the form of purified technical raw material is concentrated, wherein the first intermediate product is concentrated in both vacuum rotary evaporator units 7a, 7b simultaneously. Concentration takes place in each of the vacuum rotary evaporator units 7a, 7b simultaneously, in two process sub-stages, carried out in each of said units 7a, 7b.

In the first sub-stage, each of the evaporator units 7a, 7b yields the second intermediate product with hydrogen peroxide concentration between 71% and 84 % in aqueous solution, such that the first intermediate product from the buffer tank 6 is pumped using a vacuum pump 10 to at least one evaporating vessel 15 of the vacuum rotary evaporator units 7 and subjected to the first vacuum distillation stage under steam pressure between 10 mbar and 15 mbar, where the first intermediate product is obtained with hydrogen peroxide concentration between 71% and 84 % in aqueous solution,

In the second sub-stage the final product is obtained as solution with hydrogen concentration between 85% and 98% of hydrogen peroxide in this solution, such that the first intermediate product is subjected to the second vacuum distillation stage, wherein working pressure of steam is adjusted during the second stage, to a value between 5 mbar and 9 mbar, preferably 7 mbar, obtaining the final product with hydrogen peroxide concentration between 85 and 98% in this solution, which is then transferred to the receiving vessel 12. In the presented embodiment, hydrogen peroxide from the receiving vessel 12 is transferred to 5 L canisters.

In the first of the embodiments, 25 kg of the resulting 50% hydrogen peroxide from the buffer tank 6 is transferred to the hydrogen peroxide concentrating unit 7, where it is vacuum distilled in the evaporating vessel 15 of the first vacuum rotary evaporator unit 7a according to Fig, 2, in two sub-stages of a single concentration process cycle in the evaporator unit 7a.

In the first sub-stage, the initial hydrogen peroxide is vacuum distilled under the initial steam pressure of 10 mbar and the initially purified second intermediate product 26 is obtained as 80% hydrogen peroxide.

During the first distillation sub-stage in this embodiment, it is carried out such that the first distillate with concentration of 68% is removed to the receiving vessel 12 in said first evaporator unit 7a. Next, once the hydrogen peroxide temperature of 29°C is reached, as controlled using the temperature sensor 21, the pressure value is changed to 7 mbar in the second sub-stage and the distillation is continued, with the second intermediate product with concentration of 86% collected in the receiving vessel 12 in this evaporator unit.

In the second embodiment, the concentration process is carried out as in the first embodiment.

The use of a buffer tank 6 and separate vacuum rotary evaporator units 7a, 7b in these embodiments is justified, as the purification installation in the form of an initiating module 16 and the set 4 of reverse osmosis columns 5 purifies more of the raw material than the hydrogen peroxide concentration unit 7 is able to process and the excess is collected in the buffer tank. In this embodiment, the use of two identical and synchronously operated evaporator units 7a, 7b allows the desired product parameters to be achieved.

The purification process carried out in the set 4 of reverse osmosis columns 5 according to the invention is carried out until 80% of the technical raw material is purified. The technical raw material is supplied to the initiating module 16 present in the technical tank 1 with 1000 L capacity. In the discussed embodiment, the purification process treats 800 L of hydrogen peroxide, which is subsequently transferred to the buffer tank 6 with the corresponding capacity. The remaining part of the technical raw material in the form of 200 L of filtration waste 24 is returned to the technical tank 1.

Fig. 1 also presents the flow equipment connecting the buffer tank 6 with the technical tank 1. If the membrane is damaged during the continuous process used to produce hydrogen peroxide according to the invention, an emergency procedure is provided in which the intermediate product which has not been correctly purified and entered the buffer tank is returned to the initial tank 1. Incorrect purification of the first intermediate product is identified by sampling carried out in the sampling module 22.

The evaporating vessel 15 shown in each vacuum rotary evaporator unit 7a, 7b is a round bottom flask placed in a water bath maintained at 60°C, equipped with a rotary drive mechanism rotating the flask around its axis of symmetry. The flask is rotated in this embodiment at 20 rotations per minute. The rotation speed of the flask may be different in other embodiments.

### List of designations used in the figures

1. Technical tank
2. Process water
3. Piston pump
4. Reverse osmosis column set
5. Reverse osmosis column
5a. Membrane
6. Buffer tank
7. Hydrogen peroxide concentration unit
7a. First vacuum rotary evaporator unit
7b. Second vacuum rotary evaporator unit
8. Condenser
9. Cooling unit
10. Vacuum pump
11. Bulk tank
12. Receiving vessel
13. Steam bath
14. Valve
15. Evaporating vessel
16. Initiating module
17. Motor
18. Steam line
19. Final receiving vessel
20. Pressure gauge sensor
21. Temperature sensor
22. Sampling module
22a. Density meter
22b. Conductometer
22c. Concentration analyser

## Claims

1. Method of producing highly concentrated hydrogen peroxide, wherein the initial technical raw material in the form of aqueous solution of hydrogen peroxide with concentration between 50% and 60% is purified, and thus purified aqueous solution of hydrogen peroxide is placed in the evaporating vessel of a vacuum rotary evaporator unit and subjected to vacuum distillation, followed by collection of the final product in the form of aqueous solution of hydrogen peroxide with hydrogen peroxide concentration between 85% and 95%, **characterised in that** the technical raw material is purified in a set (4) of reverse osmosis columns (5), such that the technical raw material with concentration between 50% and 60% is transferred from the tank (1) of technical raw material placed in the initiating module (16) using a piston pump (3), to the set (5) of reverse osmosis columns (4) containing membranes (5a), where feed is obtained during purification, in the form of purified first intermediate product and filtration waste in the form of condensate collected from the membrane surfaces (5a), wherein said condensate is returned to the technical tank (1) in the initiating module (16), while the purified technical raw material as the first intermediate product is directed to the buffer tank (6), where quality of the technical raw material is controlled in the sampling module (22).

2. A method of producing according to Claim 1, **characterised in that** parameters of the purified first intermediate product are controlled in the sampling module (22) where, using a density meter (22a), a conductometer (22b) and a concentration analyser (22c) the following parameters are controlled individually: density, conductivity and metal contamination, wherein the permitted density parameters are maintained in the range from 1.22 g/cm3 to 1.24g/cm3, conductivity parameters from 90 µS/cm to 120 µS/cm and the permitted metal contamination parameters are maintained in the range from 0.01 to 0.015 mg/L.

3. The method of producing according to Claim 1 or 2, **characterised in that** the purified technical raw material with concentration between 50% and 60% is transferred from the buffer tank (6) to the hydrogen peroxide concentration unit (7) including at least two vacuum rotary evaporator units (7a, 7b), where the intermediate product is concentrated, wherein the first intermediate product is concentrated in both vacuum rotary evaporator units (7a, 7b) through vacuum distillation, which is carried out simultaneously, wherein the first intermediate product is distilled in two sub-stages and in the first sub-stage, the second intermediate product is obtained in each evaporator unit (7a, 7b) as aqueous solution of hydrogen peroxide with concentration between 71% and 84 % of hydrogen peroxide in water, while the final product is obtained in the second stage, in the form of aqueous solution with hydrogen peroxide concentration between 85 and 98 % of hydrogen peroxide in this solution.

4. The method of producing according to Claim 3, **characterised in that** the first product is pumped from the buffer tank (6) using a vacuum pump (10) to at least one evaporating vessel (15) of the hydrogen peroxide concentration unit (7) and subjected to the first vacuum distillation stage under the pressure between 10 mbar and 15 mbar, where the first intermediate product is obtained as aqueous solution with hydrogen peroxide concentration between 71 % and 84%, after which, in the same concentration unit (7) and using the same vacuum rotary evaporator units (7a, 7b) the second concentration sub-stage is carried out in one process cycle, wherein the first intermediate product is subjected to the second vacuum distillation stage, wherein the working steam pressure is adjusted during the second stage to a value between 5 mbar and 9 mbar, obtaining the final product with hydrogen peroxide concentration between 85 and 98 % in this solution, which is then transferred to the receiving vessel (12).
